# EUROPEAN PATENT APPLICATION

(11) **EP 2 800 237 A1**
(43) Date of publication of application: **05.11.2014**
(21) Application number: 12750309.2
(22) Date of filing: 13.06.2012
(51) Int. Cl.: H02J 13/00, H02J 3/00, H04Q 9/00

(54) **POWER MANAGEMENT SERVER DEVICE, POWER MANAGEMENT METHOD AND POWER MANAGEMENT PROGRAM**

(30) Priority: 28.12.2011 JP 2011287869
(71) Applicant: Kabushiki Kaisha Toshiba, Minato-ku, Tokyo 105-8001 (JP)
(72) Inventor: TAIRA, Hiroshi, Tokyo 105-8001 (JP); YOGO, Masashige, Tokyo 105-8001 (JP); YAMASAKI, Yutaka, Tokyo 105-8001 (JP)
(74) Representative: Granleese, Rhian Jane
(86) International application number: PCT/JP2012/065144
(87) International publication number: WO 2013/099322

(57) **Abstract**

In order to manage the power consumption at a user's electrical apparatuses, the user's activity schedule is registered in various patterns, and the operation schedule of the electrical apparatuses is stored in various patterns. The operation schedule of the electrical apparatuses is specified in accordance with the user's activity schedule registered. The electrical apparatuses are controlled in accordance with the operating schedule thus specified. The power consumption at the home appliances can thereby be appropriately managed in various conditions, to meet the user's activity schedule and preference.

## Description

### Technical Field

The present invention relates to a power management server apparatus, a power management method and a power management program, each for managing the power consumption of electrical apparatuses (hereinafter called "home appliances home appliances"), for example including home appliances.

### Background Art

Techniques of manually setting the power control on various home appliances home appliances in a house or an apartment house (living quarters), in accordance with the lifestyle (personal states) of the users of the apparatuses, i.e., people living there, have been proposed. A household apparatus control system has been proposed, which controls power consumption on the basis of personal states. In the system, once a user has manually input his or her personal states, such as "going out," "going to bed" and "coming home," the home appliances are automatically turned on or off in accordance with prescribed rules. In addition to this control system, a power supply control system and a method of controlling the power supply system have been proposed, which automatically switches the home appliances to the power-saving mode in accordance with community information showing a possible power shortage.

### Prior-Art Documents

### Patent Documents

Patent Document 1: Jpn. Pat. Appln. KOKAI Publication 2003-350819
Patent Document 2: Jpn. Pat. Appln. KOKAI Publication 2009-171823

### Summary of Invention

### Technical Problem to Solve

In the control system mentioned above, however, the user must manually input the personal states every time the states change. It takes the user much time and trouble to input the personal states. If the user fails to input the personal states, the power control can no longer be performed appropriately to save power.

An embodiment has been devised in order to solve this problem, and aims to provide a power management server, a power management method and a power management program, which can appropriately control the electrical power the home appliances consume, in accordance with the user's activity schedule or preference.

### Solution to Problem

To solve the problem specified above, a power management server apparatus according to the embodiment is designed to manage power consumption at user's electrical apparatuses. The server apparatus comprises: activity schedule registration means for registering the user's activity schedule in various patters; operating schedule storage means for storing an operating schedule for the electrical apparatuses in the various patterns; operating schedule specifying means for specifying the operating schedule for the electrical apparatuses, registered in the activity schedule registration means, in accordance with the user's activity schedule registered in the activity schedule registration means; and power control means for controlling the power consumption at the electrical apparatuses in accordance with the operating schedule specified by the operating schedule identifying means.

### Advantageous Effects of Invention

So configured as described above, the embodiment can provide a power management server apparatus, a power management method and a power management program, which can manage the electrical power the home appliances consume, in accordance with the user's activity schedule or preference.

### Brief Description of Drawings

FIG. 1 is a block diagram showing the configuration of a power management system according to an embodiment;
FIG. 2 is a diagram showing the home gateway of the power management system shown in FIG. 1;
FIG. 3 is a diagram outlining an example of registered monthly schedule of a person who uses the system shown in FIG. 1;
FIG. 4 is a table showing the weekday/holiday operating schedule of home appliances, which is based on the operating schedule of the system shown in FIG. 1;
FIG. 5 is a table showing the weekday/holiday operating schedule of home appliances, which is set for the power-saving mode of the system shown in FIG. 1;
FIG. 6 is a table showing the weekday/holiday operating schedule of home appliances, which is set for the case where a power-saving instruction is given while the system of FIG. 1 is operating on the user's activity schedule;
FIG. 7 is a flowchart showing how the weekday/holiday operating schedule of home appliances is changed in the system of FIG. 1, when the system is instructed to save power for a specific hour while operating in accordance with the user's activity schedule; and
FIG. 8 is a block diagram of another embodiment, in which an external apparatus has the function of the home gateway shown in FIG. 1.

### Description of Embodiments

A household apparatus control system having a power management server according to the embodiment will be described with reference to the accompanying drawings.

### (Embodiment 1)

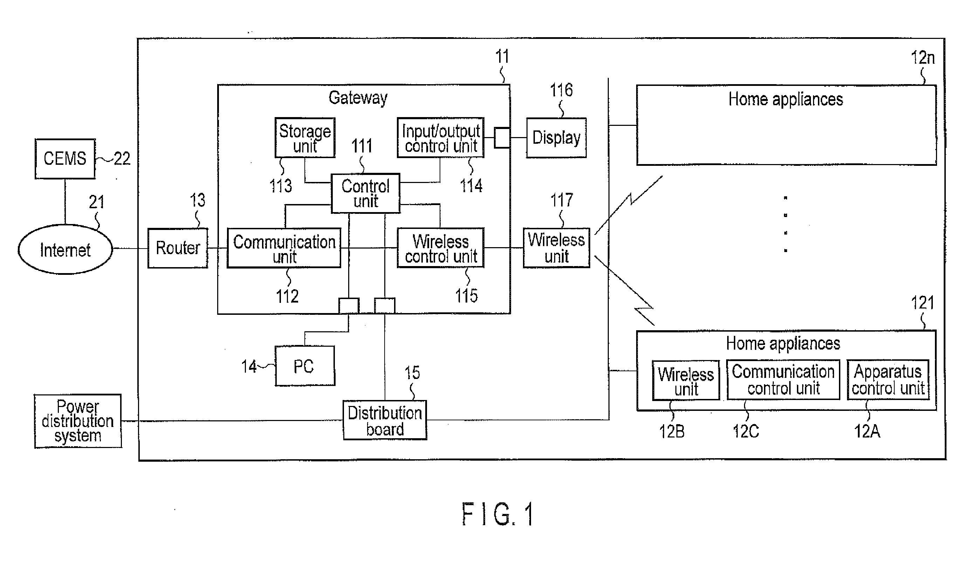

FIG. 1 is a block diagram showing the configuration of a power management system according to Embodiment 1. As shown in FIG. 1, a home gateway 11 is arranged in a house. The home gateway 11 is used as power management server and configured to control all home appliances 121 to 12n that are connected to a household network. The home gateway 11 is removably connected to a router 13 by a connector (not shown). The home gateway 11 is connected by the router 13 to the Internet 21, and can receive power demand-supply information from a cluster/community energy management system (CEMS) 22 provided on the Internet 21.

The home gateway 11 comprises a control unit 111, a communication unit 112, a storage unit 113, an input/output control unit 114, and a wireless control unit 115. The control unit 111 controls the communication unit 112, storage unit 113, input/output control unit 114 and wireless control unit 115 in accordance with a program preset in it. To the input/output control unit 114, a display 116 used as monitor is removably connected by a connector. The wireless control unit 115 can perform wireless communication with the home appliances 121 to 12n via a wireless unit 117.

The communication unit 112 transmits and receives data to and from external apparatuses connected to the Internet 21, through the above-mentioned router 13. The communication unit 112 also performs communication with the home appliances 121 to 12n via the wireless unit 117.

In the storage unit 113, there are registered user data (personal information), house data (home information) and community data (community information). More specifically, the personal information includes lifestyle data (for example, activity schedule) and preference data (for example, temperatures comfortable to the user), the home information includes the temperature data prescribed for the respective rooms and the data about the other living quarters, and the community information is the operating schedule of the home appliances, which is based on, for example, supply forecast and weather forecast.

The input/output control unit 114 causes a display terminal used as monitor to display the information stored in, for example, the storage unit 113. Seeing this information displayed, the user can know what is registered in the storage unit 113.

The wireless control unit 115 receives status data from the home appliances 121 to 12n via the wireless unit 117, for example, wireless router, and transmits drive control data to the home appliances 121 to 12n.

Note that the control unit 111 can be connected to a personal computer 14. The user may operate the personal computer 14 to have personal information registered and to achieve communication setting.

The home gateway 11 and the home appliances 121 to 12n are supplied with power from a power supply system through a distribution board 15. Each of the home appliances 121 to 12n have an apparatus control unit 12A, a wireless unit 12B, and a communication control unit 12C. The apparatus control unit 12A controls the other components of the household apparatus. The wireless unit 12B performs communication with the wireless unit 117 of the home gateway 11. The communication control unit 12C controls the wireless unit 12B. In response to a drive command coming from the home gateway 11, the home appliances 121 to 12n send their status data to the home gateway 11, and operate in accordance with the drive command.

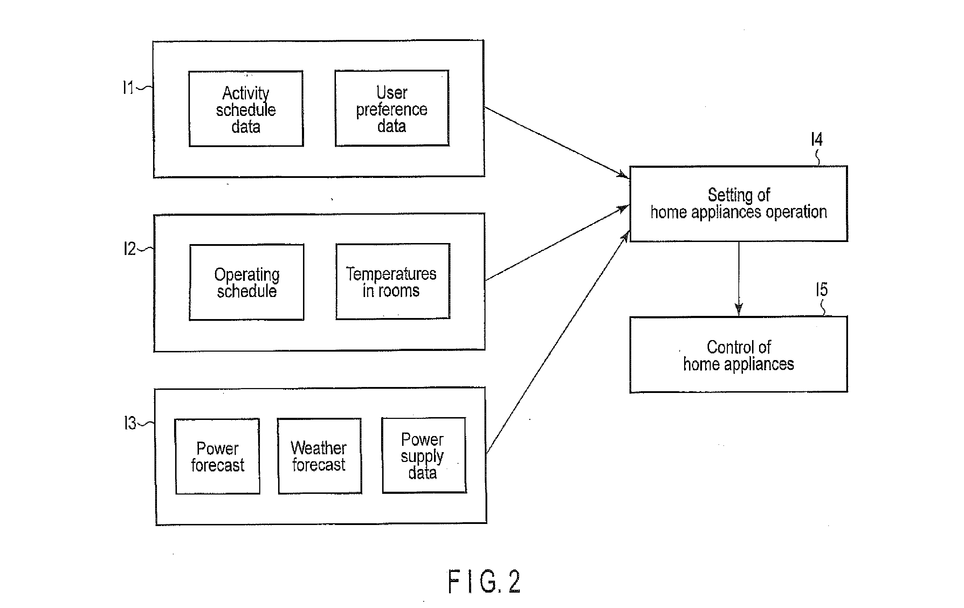

FIG. 2 is a diagram showing the process the home gateway 11 performs. Personal information I1, home information I2 and community information I3 are registered at first in the process shown in FIG. 12.

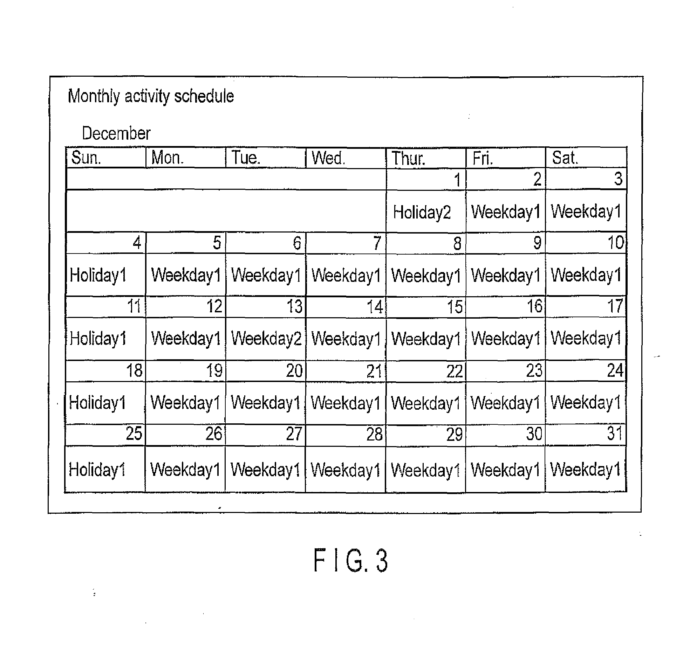

As personal information I1, such monthly schedule as shown in FIG.3 is registered as the user operates the personal computer 14. As shown in FIG. 3, the monthly schedule is composed of activity schedules for weekdays 1, weekdays 2, holidays 1 and holidays 2. The activity schedule registered for each day includes the getting-up time, go-to-work time, come-home time, bathing time, go-to-bed time, etc. The personal information I1 registered contains the preference data such as the temperature, humidity, brightness, hot-water temperature, all comfortable to the user.

The user may directly input the activity schedule and the preference data, thereby to register them. Instead, the user's daily actions at home may be detected by sensors installed in the house, recorded and statistically processed, and automatically registered. More precisely, the activity schedule and preference data are automatically generated from the user's activity detected by sensors and the use of the home appliances, both recorded for a prescribed period and (for example, one week or one month).

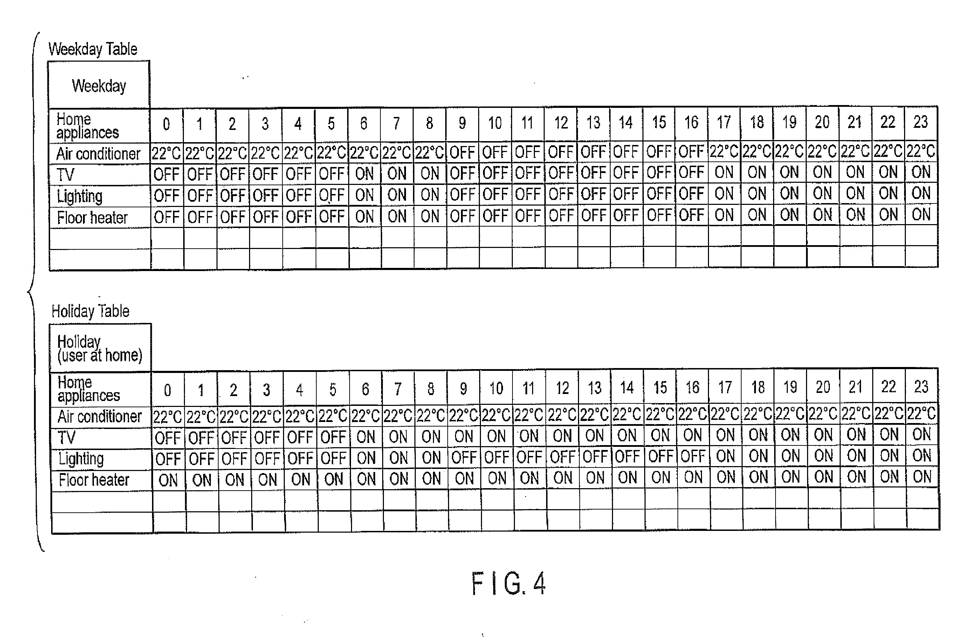

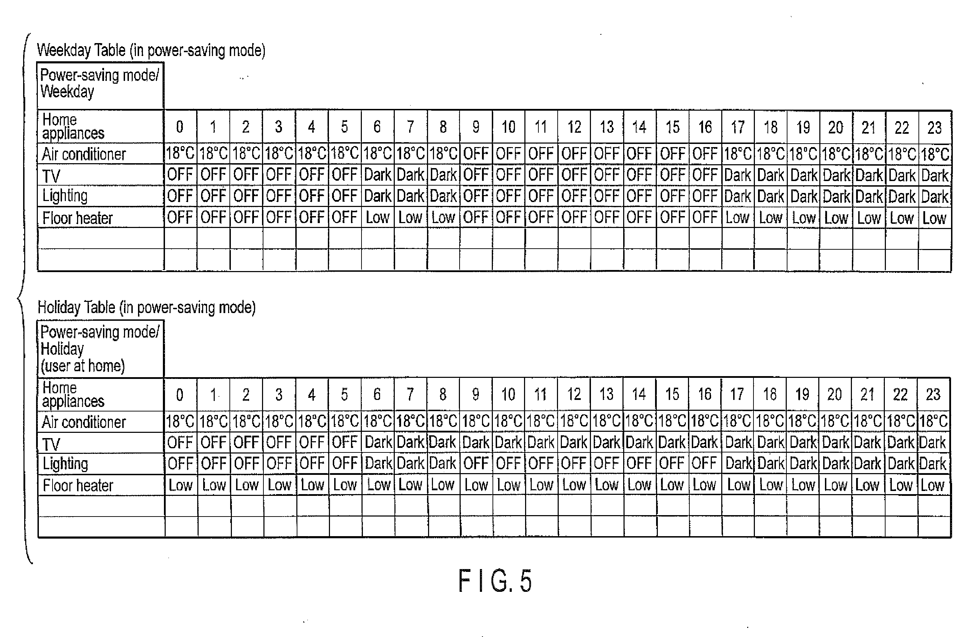

Next, such weekday schedule and holiday schedule, shown in FIG.4, are registered as home information I2, for the home appliances 121 to 12n. Either schedule is a table based on the user's preference (for example, temperature and lighting brightness comfortable to the user) and showing the operating schedules of various home appliances for a weekday or a holiday. Alternatively, the weekday and holiday schedules may be such tables as shown in FIG. 5, each showing that some home appliances should operate in power-saving mode for specified time brackets of the day, in response to a power-save command. Further, the data representing the temperature in each room is detected by a sensor and registered.

Moreover, the power forecast (i.e., predicted power demand), the weather forecast and power supply data are registered as community information I3. The community information 13 may be the data sent from the CEMS 22, not input by the user.

If the personal information I1, home information I2 and community information 13 are completely registered as described above, the control unit 111 performs drive setting I4 of the home appliances, in accordance with the information I1, information I2 and information I3. Once the apparatuses have started operating in the drive modes so set, operating schedules are automatically specified for the respective home appliances. Thus, the control unit 111 causes each household apparatus to perform an operation I5 in accordance with the drive setting I4.

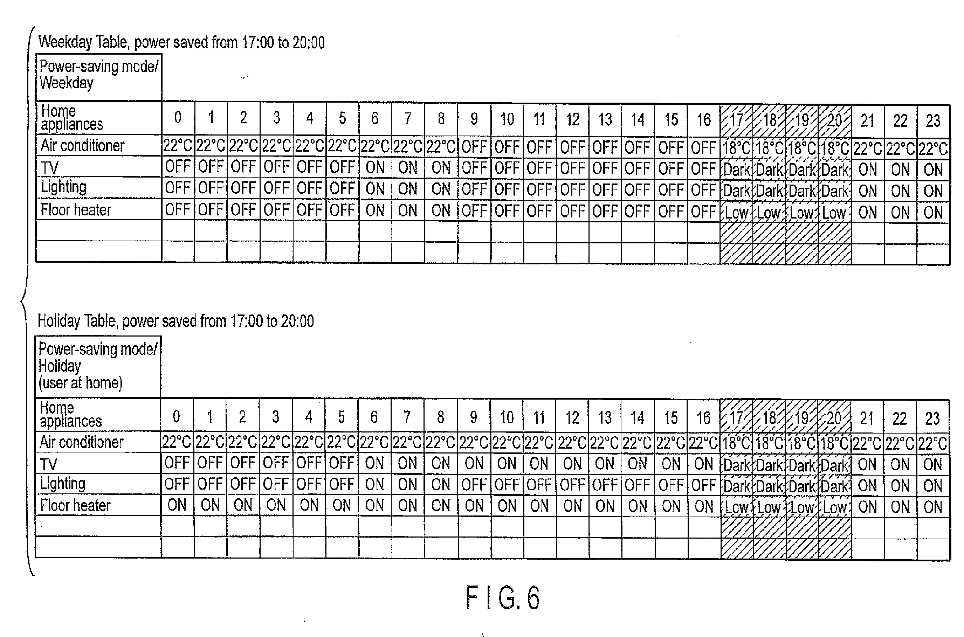

Assume that the power supply-and-demand information shows that power must be saved from 17:00 to 21:00 as shown in FIG. 6. Then, the power-saving table for week days or holiday, shown in FIG. 5, is referred to, thereby switching the operating schedule to the power-saving operating schedule for the 17:00-21:00 period. Thus, various operating schedules are registered for each household apparatus, and one schedule is switched to another in accordance with the power supply-and-demand information. Each household apparatus can therefore be controlled in accordance with the user's request, and can appropriately operate in response to the power-save command.

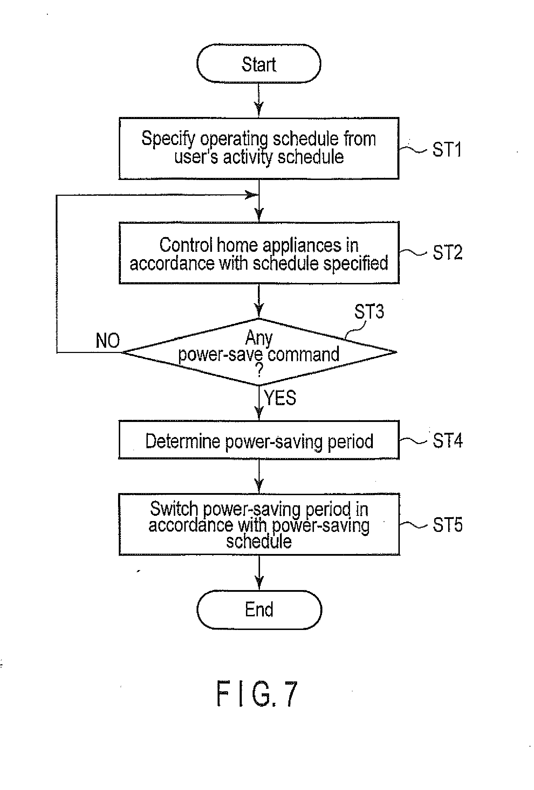

FIG.7 is a flowchart showing how the home gateway 11 operates upon receiving the power-save command. Assume that the user's activity schedule contained in the personal information I1 and the condition tables and power-save tables of the operating schedule contained, for each household apparatus, in the home information I2 are registered in the initial setting. The control is started at 0:00 for the day (Step S1). The user's activity schedule for the day is selected (Step S2). In accordance with the activity schedule for the day, the home appliances are controlled hour by hour (Step S3). Then, whether the community information contains a power-save command is determined at regular intervals. If the community information contains no power-save commands, the home gateway 11 returns to Step S3 and keeps controlling the household apparatus in accordance with the activity schedule selected. If the community information contains a power-save command, the home gateway 11 determines the power-saving period designated (Step S4). Then, the home gateway 11 extracts the power-saving period thus determined, from the operating schedule being used now, reads the activity schedule for the period, from the table prepared for power-save commands, and switches the power-saving period to the activity schedule thus read (Step S5). Thereafter, the home gateway 11 returns to Step S3 and keeps controlling the household apparatus in accordance with the activity schedule read thus read.

As described above, the home gateway 11 automatically switches only the power-saving period to the power-saving activity schedule in response to a power-save command. The home gateway 11 can therefore easily serve to save power, not compelling the user to do anything.

The user uses the personal computer 14 to register an activity schedule item, such as getting-up time, as personal information I1. Instead, the user may use a portable PC terminal device (not shown) or a mobile telephone (not shown) to register an activity schedule item or to change any activity schedule item registered.

To be more specific, the user first operates the portable PC terminal device, registering his or her activity schedule in the portable PC terminal device. The user then connects the portable PC terminal device to the home gateway 11 via the Internet 21. Further, the user designates the weekday schedule or the holiday schedule on the display screen of the terminal device. The terminal device therefore transmits a signal representing the activity schedule selected, to the home gateway 11. The home gateway 11 receives the signal, which is stored in the storage unit 113. Thereafter, the home gateway 11 selects the weekday schedule or the holiday schedule in accordance with the activity schedule it has received. The home gateway 11 then controls the home appliances in accordance with the schedule selected. Hence, the home gateway 11 can timely control the home appliances to same power, even if the user takes a day-off on a weekday.

### (Embodiment 2)

In the embodiment described above, the home gateway 11 controls the home appliances. This function of the home gateway 11 is performed by an external power management server in a second embodiment, which will be described below.

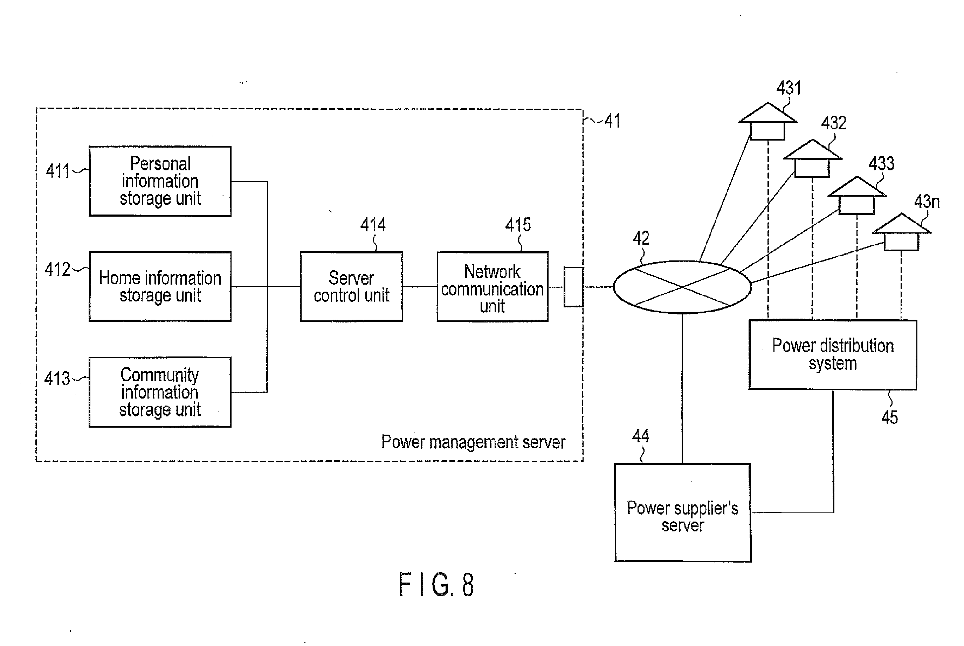

FIG. 8 is a block diagram showing the configuration of a power management system according to the second embodiment. As shown in FIG. 8, the system comprises a power management server 41. The power management server 41 comprises a server control unit 414 and a network communication unit 415. The server control unit 414 has the function of a server. The network communication unit 415 is configured to connect the server control unit 414 to an external network. The server control unit 414 can therefore be connected to the Internet by the network communication unit 415.

The power management server 41 is connected via the Internet to the home gateways installed in the houses 431 to 43n of the subscribers to the power management system. Each of the houses 431 to 43n has such a network system of the home gateway 11 as shown in FIG. 1. The power management server 41 according to this embodiment has a section identical to the power management section of the home gateway 11 shown in FIG. 1. More precisely, the server 41 comprises a personal information storage unit 411 and a home information storage unit 412. The personal information storage unit 411 is used to register personal information 11 shown in FIG. 2, and the home information storage unit 412 is used to register home information 12 shown in FIG. 2. Through the Internet, the user can register information in the storage units 411 and 412 from his or her personal computer or mobile terminal. The information is registered in the form of the table of FIG. 3, showing an activity schedule, the tables of FIG. 4, showing the ordinary operating schedules of the home appliances, and the tables of FIG. 5, showing the power-saving mode operating schedules of the apparatuses. The power management system further comprise a community information storage unit 413 in which the community information shown in FIG. 2 can be registered. Therefore, the weather forecast information acquired via the Internet and the power supply-and-demand information acquired from the power supplier's server 44 can be registered in the community information storage unit 413.

In the home gateway (FIG. 1) installed in each of the subscribers' houses 431 to 43n, the power management section depends on the power management server 41. Therefore, the power management server 41 causes the home gateway to controls the power used in the home appliances once the personal information, home information and community information have been registered.

In the power management server 41, the server control unit 414 reads the subscriber's activity schedule as in the process shown in FIG. 7, in accordance with start instructions. The server control unit 414 then specifies the operating schedules of the home appliances in the subscriber's activity schedule. Further, the server control unit 414 instructs the home appliances to operate in accordance with the operating schedules, through the Internet and the gateway installed in the subscriber's house. The power management server 41 may receive a power-save command signal from the power supplier's server 44. In this case, the power-save command is registered in the community information storage unit 413, and the operating schedules of the apparatuses are switched to the power-saving mode operating schedule for the period during which power should be saved as shown in FIG. 6. In the subscriber's house, the home gateway controls the home appliances in accordance with the power-saving mode operating schedule. That is, the home gateway manages the operating schedules of the home appliances, in the same way as the home gateway 11 of Embodiment 1. As a result, the system can reduce the power consumption in all subscribers' houses for any power-saving period designated.

In the case described above, the power management server 41 controls the home appliances through the home gateway. Alternatively, the power management server 41 may instruct the home gateway to control the home appliances, and the home gateway may accordingly control the household apparatus. More specifically, the home gateway may have a storage unit that stores various data identical to the power control data stored in the storage units 411 to 413 of the power management server 41. Then, the data available in the power management server 41 can be sent, by communication, to the home gateway and stored therein, and the home gateway can use the data to control the household apparatus.

In the power management system so configured as described above, the power management server 41 can generally manage the power consumption at the home appliances installed in each subscriber's house. This can reduce the power management ability required of the power management equipment installed in each subscriber's house.

In Embodiments 1 and 2 described above, the home gateway or an external power management server may receive, from a mobile telephone, a schedule signal. Then, the personal schedule of the telephone user can be registered or changed in the home gateway or the external power management server, and can be used change the schedule of supplying power to the home appliances. Thus, the user can change the schedule anytime and anywhere, by using the mobile telephone. This helps him or her to enjoy life, merely by changing the schedule on the mobile phone.

In the embodiments described above, the home appliances are controlled independently of one another. Instead, the distribution board may have a control unit (not shown), which controls the household apparatus, group by group.

The power management program that causes the computer to perform the process of FIG. 7 can be recorded in a recording medium and thereby be distributed.

The present invention is not limited to the embodiments described above. The components of the embodiment can be modified in various manners in reducing the invention to practice, without departing from the sprit or scope of the invention. Further, the components of any embodiment described above may be combined, if necessary, in various ways to make different inventions. For example, some of the component of any embodiment may not be used. Moreover, the components of the different embodiments may be combined in any desired fashion.

### Industrial Applicability

The embodiments can be applied to home energy management systems (HEMSs) that control the power consumption at the apparatuses, particularly those installed in houses.

### Reference Sign List

11: Home gateway, 111: control unit, 112: communication unit, 113: storage unit, 114: input/output control unit, 115: wireless control unit, 116: display for monitor, 117: wireless unit, 121 to 12n: home appliances, 12A: apparatus control unit, 12B: wireless unit, 12C: communication control unit, 13: router, 14: personal computer, 21: Internet, 22: CEMS, 41: power management server, 431 to 42n: subscribers' houses, 411: personal information storage unit, 412: home information storage unit, 413: community information storage unit, 44: power supplier's server.

## Claims

1. A power management server apparatus designed to manage power consumption at user's electrical apparatuses, the server apparatus **characterized by** comprising:
activity schedule registration means for registering the user's activity schedule in various patters;
operating schedule storage means for storing an operating schedule for the electrical apparatuses in the various patterns;
operating schedule specifying means for specifying the operating schedule for the electrical apparatuses, registered in the activity schedule registration means, in accordance with the user's activity schedule registered in the activity schedule registration means; and
power control means for controlling the power consumption at the electrical apparatuses in accordance with the operating schedule specified by the operating schedule identifying means.

2. The power management server apparatus according to claim 1, **characterized in that** the activity schedule registration means detects the user's activities, accumulates data representing the user's activities, determines a pattern of the user's activities and applies the pattern to the user's activity schedule.

3. The power management server apparatus according to claim 1, **characterized by** further comprising power-save command receiving means for receiving a power-save command given by an external apparatus as power-demand information,
wherein the operating schedule storage means further stores a power-consumption control schedule associated with the power-save command, and the operating schedule specifying means switches, on receiving the power-save command, the operating schedule specified in accordance with the user's activity schedule, to the power-consumption control schedule.

4. The power management server apparatus according to claim 3, **characterized in that** the operating schedule specifying means switches the operating schedule only for a period designated by the power-save command.

5. A power management server apparatus designed to manage power consumption at the electrical apparatuses installed in each subscriber, the server apparatus **characterized by** comprising:
activity schedule registration means for registering the subscriber's activity schedule in various patters;
operating schedule storage means for storing the operating schedule for the electrical apparatuses in the various patterns;
operating schedule specifying means for specifying the operating schedule for the electrical apparatuses, registered in the activity schedule registration means, in accordance with the subscriber's activity schedule registered in the activity schedule registration means; and
notifying means for notifying to the subscriber's house that the power consumption at the electrical apparatuses should be controlled in accordance with the operating schedule specified by the operating schedule identifying means.

6. A power management method designed to manage power consumption at user's electrical apparatuses, the method **characterized by** comprising:
registering the user's activity schedule in various patterns;
storing an operating schedule for the electrical apparatuses in the various patterns;
specifying the operating schedule for the electrical apparatuses in accordance with the user's activity schedule registered; and
controlling the power consumption at the electrical apparatuses in accordance with the operating schedule specified.

7. The power management method according to claim 6, **characterized in that** the activity schedule is registered by detecting the user's activities, accumulating data representing the user's activities, automatically determining a pattern of the user's activities and applying the pattern to the user's activity schedule.

8. The power management method according to claim 6, **characterized by** further comprising:
receiving a power-save command given by an external apparatus, as power-demand information;
storing a power-consumption control schedule associated with the power-save command; and
switching the operating schedule specified in accordance with the user's activity, to the power-consumption control schedule, on receiving the power-save command.

9. The power management method according to claim 8, **characterized in that** the operating schedule is switched only for a period designated by the power-save command.

10. A power management method designed to manage power consumption at the electrical apparatuses installed in each subscriber, the method **characterized by** comprising:
registering the subscriber's activity schedule in various patters;
storing the operating schedule for the electrical apparatuses in the various patterns;
specifying the operating schedule for the electrical apparatuses, thus stored, in accordance with the subscriber's activity schedule registered; and
notifying to the subscriber's house that the power consumption at the electrical apparatuses should be controlled in accordance with the operating schedule thus specified.

11. A power management program to cause a computer to manage the power consumption at user's electrical apparatuses, the program describing:
an operation schedule specifying step of specifying an operating schedule for the electrical apparatuses, in accordance with the user's activity schedule, after the user's activity schedule and the operating schedule for the electrical apparatuses have been stored in various patters; and
a power controlling step of controlling the power consumption at the electrical apparatuses in accordance with the operating schedule specified in the operation schedule specifying step.

12. The power management program according to claim 11, **characterized in that** if a power-save command is received from an external apparatus as power-demand information and a power-consumption control schedule associated with the power-save command is stored, the operating schedule specified in accordance with the user's activity schedule is switched to the power-consumption control schedule in the operation schedule specifying step, upon the receipt of the power-save command.

13. The power management program according to claim 12, **characterized in that** the operating schedule is switched in the operation schedule specifying step, only for a period designated by the power-save command.

14. A power management program to cause a computer to manage the power consumption at subscriber's electrical apparatuses, the program describing:
an operation schedule specifying step of specifying an operating schedule for the electrical apparatuses, in accordance with the subscriber's activity schedule, after the user's activity schedule and the operating schedule for the electrical apparatuses have been stored in various patters; and
a notifying step of notifying to the subscriber's house that the power consumption at the electrical apparatuses should be controlled in accordance with the operating schedule specified in the operation schedule specifying step.
